# EUROPEAN PATENT APPLICATION

(11) **EP 1 329 342 A1**
(43) Date of publication of application: **23.07.2003**
(21) Application number: 03000946.8
(22) Date of filing: 16.01.2003
(51) Int. Cl.: B60C 25/132

(54) **Improved tyre changing machine**

(30) Priority: 17.01.2002 IT MO20020009
(71) Applicant: SICAM S.r.l., 42015 Correggio (Reggio Emilia) (IT)
(72) Inventor: Magnani, Franco, 42015 Correggio (RE) (IT)
(74) Representative: Vannini, Mario

(57) **Abstract**

An improved tyre changing machine comprises a lateral bead-breaking arm (2) provided with a bead-breaking tool (5) and an assembly (1) for the actuation of said arm (2). The actuation assembly comprises a box-like base frame (4) on at least one side (23) of which is articulated the arm (2), a horizontal rotary platform (6) mounted on the box-like base frame (4) for supporting and clamping a wheel (R), a column (7) mounted on the box-like base frame (4) for supporting an upwardly projecting work tool. The assembly (1) comprises at least one gear reducer motor (8) mounted inside the box-like base frame (4) and a rotary motor-driven shaft (9) projecting from the gear reducer motor (8) and carrying a crank means (10), a connecting rod means (11) pivotally connected between the crank means (10) and the lateral bead-breaking arm (2), in such a manner that the arm (2) can move from a released position to a compressing position of a tyre and vice versa.

## Description

### Technical Field

The present invention relates to an improved tyre changing machine including an assembly for actuation of a lateral bead-breaking arm.

### Background Art

The known tyre changing machines are conventionally provided with a base frame having on one side thereof an arm equipped at one end with a substantially vertical tool for breaking the bead of tyres before they are removed. This arm is hinged to the opposite end thereof about a vertical axis in such a manner that it can be swung horizontally between an open position in which it is spaced apart from the aforesaid base frame so as to permit the insertion of the tyre from the rim of which the tyre bead is to be broken, to a progressively closed position in which the bead-breaking tool presses on the beads of the tyre, thus detaching them from the edges of the rim.

The bead-breaking operation is performed in a number of steps, each time acting on an arc of the tyre by pressing it and releasing it until the entire circumference of the tyre has been completed, after which the tyre is turned around and the operation is repeated on the opposite side.

In known tyre changing machines, the aforesaid arm is actuated using a pneumatic cylinder acting on a rod which connects the arm transversally to the cylinder and transmits its alternating movement to it.

This cylinder is in turn controlled by a pedal positioned on the base of the machine and operated by the operator when required; said pedal is connected via a circuit to a valve that opens and closes the supply of compressed air which activates the actuator and hence the arm.

Although offering satisfactory performance, this method of actuating the bead-breaking arm is complex to construct and accounts for a significant portion on the overall cost of the tyre changing machine given that it consists of a multiplicity of components connected together by means of circuits and driven by valves and cylinders.

### Disclosure of the invention

The main object of the present invention is to conceive an improved tyre changing machine provided with a simplified assembly for the actuation of the lateral bead-breaking arm thereof, which assembly is in other words able to significantly simplify the structure that moves said bead-breaking arm with respect to the conventional tyre changing machines, thus reducing the number of components and ultimately the cost of the tyre changing machine.

This object and these aims are all achieved by a tyre changing machine having a simplified assembly for the actuation of a lateral bead-breaking arm, as defined in claim 1.

### Brief description of the drawings

Further features and advantages of the present invention will be more apparent from the detailed description of a preferred, but not exclusive, embodiment of a simplified assembly for actuation of the lateral bead-breaking arm for tyre changing machines, which is illustrated by way of a non-limiting example in the enclosed drawings, in which:

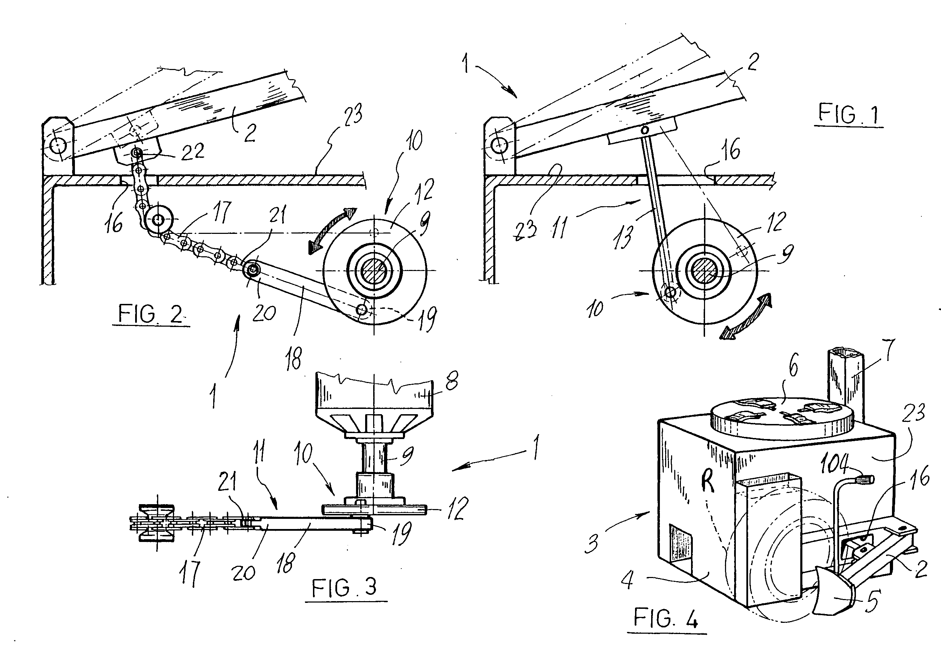

- FIG. 1 is a schematic plan view of a first embodiment of a simplified assembly for actuation of the lateral bead-breaking arm for tyre changing machines according to the present invention;
- FIG. 2 is a schematic plan view of a second embodiment of a simplified assembly for actuation of the lateral bead-breaking arm for tyre changing machines according to the present invention;
- FIG. 3 is a side view of a simplified assembly for actuation of the lateral bead-breaking arm for tyre changing machines, in the embodiment of figure 2;
- FIG. 4 is an overall view, in reduced scale, of a tyre changing machine equipped with the simplified assembly according to the present invention;
- FIG. 5 is a schematic plan view of a third embodiment of a simplified assembly for actuation of the lateral bead-breaking arm for tyre changing machines;
- FIG. 6 is a partial perspective view of the third embodiment of figure 5;
- FIG. 7a and 7b show a fourth embodiment of a simplified assembly for actuation of the lateral bead-breaking arm for tyre changing machines in two stages of movement;
- FIG. 8 shows a fifth possible embodiment of a simplified assembly for actuation of the lateral bead-breaking arm for tyre changing machines.

### Detailed description of a preferred embodiment

With particular reference to these figures, the number 1 refers overall to a simplified assembly for actuation of the lateral bead-breaking arm 2 for a tyre changing machine 3 according to the invention.

The machine 3 generally comprises a box-like base frame 4 on at least one side of which is articulated the arm 2, which is provided at its free end with a bead-breaking tool 5.

On the base frame 4 there is supported a horizontal rotary platform 6 for supporting and clamping a wheel with its tyre R, to which is engaged an upwardly projecting work tool supporting column, indicated schematically in the drawings as 7.

The simplified assembly 1 comprises at least one gear reducer motor 8 mounted inside the box-like base frame 4. A rotary motor-driven shaft 9, which supports a crank means 10, extends from the gear reducer motor 8.

A connecting rod means 11 is pivotally connected between the aforesaid crank means 10 and the arm 2. The crank means 10 comprises at least one disc 12 which is engaged with the free lower end of the rotary motor-driven shaft 9 and which is rotary integral therewith. The connection rod means 11 is eccentrically articulated to the disc 12.

In a first exemplary embodiment, the connecting rod means 11 comprises a preferably monolithic rod-shaped element 13, which has one articulated end 14 and the opposite end 15 free to slide inside a transversally perforated peg 115, which in turn passes normally through the arm 2.

At the position of the through hole in the peg 115, the arm 2 is provided with an aperture 116 enabling the free passage of the opposite end 15 of the rod-shaped element 13. On this end 15 is mounted an enlargement, in this case a nut 117 serving as an abutment for preventing removal of the rod-shaped element 13 from the aperture 116 in the peg 115.

Between the nut 117 and the peg 115 there is also inserted a shock-absorbing member, overall indicated as 118, to protect the rims. This member 118 may consist of a compression-loadable helical spring wound onto the rod-shaped element 13 or of a preferably cylindrical pad, threaded onto said rod-shaped element 13 and made of elastically deformable material.

In order to articulate with aforesaid crank means 10, the rod-shaped element 13 is passing through a specific slot 16 made in the side of the base frame 4.

In a possible alternate embodiment, the connecting rod means 11 may consist of a chain segment 17, flexible in a substantially horizontal plane and having one end connected to a small rigid bar 18, the head 19 of which is eccentrically articulated to the disc 12 and the opposite end 20 articulated to the head 21 of the chain segment 17. The opposite end 22 of the chain segment 17 is articulated directly to the bead-breaking arm 2 by means of peg 115.

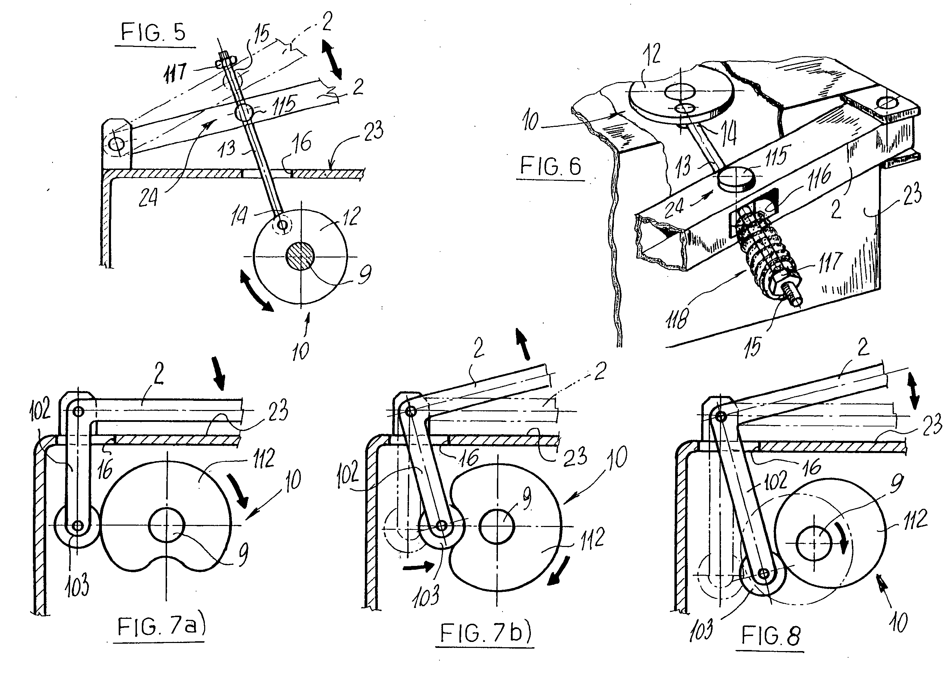

In a further possible embodiment, depicted in figures 7a and 7b, as well as figure 8, the end of the arm 2 articulated to the side 23 of the base frame 4 extends internally thereof through the slot 16, with a section bent substantially at a right angle and indicated 102. This latter bears with its tip portion on a low-friction contact element, for example an idle wheel 103, capable of resting on the external edge of the crank means 10, in this case advantageously shaped as a disc-like member 112 with an eccentric peripheral profile.

The operation of the invention can be easily understood and is in general as follows in all possible embodiments. When an operator has to break the bead of a tyre from its rim subsequent to deflation, he places the wheel R vertically against the side 23 of the box-like base frame 4, using the handle 104 to hold the arm 2 in a position spaced apart from its side 23.

The operator positions a tyre R in such a manner that the active edge of the bead-breaking tool 5 is aligned with the side of the tyre and starts the gear reducer motor 8 which causes to turn by one revolution the head 19 of the rigid bar 18 or that of the rod-shaped element 13, both of which are eccentrically articulated to the disk 12.

During the first half of its revolution, the rotation revolution exerts on the arm 2 a pulling action, the intensity of which is controlled by the resistance action of the shock-absorbing member 118 interposed between the peg 115 and the nut 117. When the resistance force of member 118 is overcome, the arm 2 is first moved towards the side 23, thus compressing the bead and separating it from the edge of the rim on which it is mounted. During the second half of the revolution, the pulling action ceases and the arm 2 is released so as to be able to move away from said rim, thus freeing the tyre R and allowing the operator to relocate it with a second bead section to be broken in a position aligned with the bead-breaking tool 5 and thus repeat the operation first on one side of the tyre and then, after turning the wheel R around, on the other side of the tyre until the beads are completely detached from the edges of the rim.

When the arm 2 is not used and the gear reducer motor 8 has the sole effect of rotating the platform 6, said arm 2 is kept resting against the side 23 of the base frame 4; this way the rod-shaped element 13, which continues to be driven by the alternating movement, is able to slide freely inside the hole made in the peg 115 and to project through the window 116 without producing any actions on the arm 2. In the same rest condition of the arm 2 maintained against the side 23, in the embodiment of the invention that involves the use of the chain segment 17 as a substitute for the rigid rod-shaped element 13, it is the flexibility between the links of the chain segment that are able to "absorb" the alternating movement generated by the actuation of the gear motor 8 while it rotates the platform 6, without causing a pulling action on the arm 2, which therefore remains stationary.

In the further embodiment characterised by the angled shape of arm 2, the rotation of the crank means 10 determines the two open and closed positions thereof, following the movement of the external profile of the crank means 10, positioned by the operator who exercises a pulling action on arm 2 by means of the handle 104 to open it and insert a wheel "R": the rotation of the crank means 10, by acting on the section 102, brings the arm 2 back towards the side 23 of the base frame 4 thereby performing the bead breaking operation with the bead-breaking tool 5.

If, by contrast, the arm 2 is maintained in contact with the side 23, the crank means 10 rotates without acting on the section 102, causing the arm 2 to remain stationary and the gear reducer motor 8 to rotate only the platform 6.

It has been practically verified that the simplified assembly for actuation of the lateral bead-breaking arm for tyre changing machines according to the present invention fulfils the established aims.

The invention described is open to numerous modifications and variants, all of which fall within the scope of protection of the following claims.

Furthermore, all details are replaceable with others that are technically equivalent and any materials, forms and dimensions may be used according to requirements.

The instant application is based upon and claims priority of patent application no. MO2001A000009, filed on 17.01.2002 in Italy, the disclosure of which is hereby expressly incorporated here in reference thereto.

## Claims

1. An improved tyre changing machine, comprising:
- a box-like base frame (4);
- a lateral bead-breaking arm (2) articulated on at least one side (23) of said box-like base frame and provided with a bead-breaking tool (5);
- an assembly (1) for the actuation of said arm (2);
- a horizontal rotary platform (6) mounted on said box-like base frame (4) for supporting and clamping a tyre (R);
- a column (7) mounted on said box-like base frame (4) for supporting an upwardly projecting work tool;
**characterised in that** said actuation assembly (1) comprises at least one gear reducer motor (8) mounted inside said box-like base frame (4) and a rotary motor-driven shaft (9) projecting from said gear reducer motor (8) and carrying a crank means (10), a connecting rod means (11) pivotally connected between said crank means (10) and said lateral bead-breaking arm (2), in such a manner that said arm (2) is alternatively movable between a released position and an active position compressing the tyre (R).

2. Machine according to claim 1, **characterised in that** said crank means (10) comprises at least one disc (12) keyed on the free end of said rotary motor-driven shaft (9) and articulated to said connecting rod means (11).

3. Machine according to claim 1, **characterised in that** said connecting rod means (11) comprises a rod-shaped element (13) having one end (14) articulated to said crank means (10) and the opposite end (15) articulated to said bead-breaking arm (2) with the interposition of guiding sliding means (24).

4. Machine according to claim 3, **characterised in that** said sliding means (24) comprises at least one vertical through peg (115), inserted normally to said arm (2) and having a transverse hole in which said rod-shaped element (13) is slidingly inserted.

5. Machine according to claims 3 and 4, **characterised in that** said rod-shaped element (13) has at said opposite end (15) an enlarged abutment body (117) for locking against disengagement from said transversal hole of said vertical peg (115).

6. Machine according to claim 5, **characterised in that** a shock-absorbing means 118 is provided for insertion between said peg (115) and said enlarged body (117).

7. Machine according to claim 6, **characterised in that** said shock-absorbing means (118) is chosen between at least one compression-loadable spring disposed on said rod-shaped element (13) and at least one pad made of elastically deformable material disposed on said rod-shaped element (13).

8. Machine according to claim 3, **characterised in that** said rod-shaped element (13) consists of a chain segment (17) flexible in a substantially horizontal plane and having one end (21) connected to a small rigid bar (18), said bar (18) having one head (19) that is eccentrically articulated to said crank means (10) and the opposite end (20) articulated to the head (21) of said chain segment (17), the opposite end (22) of said chain segment being in turn articulated to said bead-breaking arm (2).

9. Machine according to claim 1, **characterised in that** said gear reducer motor (8) is anchored to the upper wall of said box-like base frame (4) and that said rotary motor-driven shaft (9) is projecting vertically downwards.

10. Machine according to claim 1, **characterised in that** said crank means (10) comprises at least one disc-like element (112) keyed to the free end of said rotary motor-driven shaft (9) and externally shaped with an eccentric profile engageable with said connecting rod means (11).

11. Machine according to claims 1 and 10, **characterised in that** said connecting rod means (11) comprises an extension (102) of the end of said arm (2) articulated to and extending internally of said base frame (4), and a low-friction contact means mounted at the tip of said extension (102) for engagement with said eccentric profile of said disc-like element (112).

12. Machine according to claim 11, **characterised in that** said low-friction contact means consists of at least one idle wheel (103) mounted at the tip of said extension (102).
